# EUROPÄISCHE PATENTSCHRIFT

(11) **EP 0 688 984 B1**
(45) Veröffentlichungstag und Bekanntmachung des Hinweises auf die Patenterteilung: **06.05.1998**
(21) Anmeldenummer: 95108939.0
(22) Anmeldetag: 09.06.1995
(51) Int. Cl.: F16K 7/17

(54) **Membranventil**
Diaphragm valve
Soupape à diaphragme

(30) Priorität: 20.06.1994 CH 1944/94
(43) Veröffentlichungstag der Anmeldung: 27.12.1995
(73) Patentinhaber: Georg Fischer Rohrleitungssysteme AG, CH-8201 Schaffhausen (CH)
(72) Erfinder: Heiniger, Martin, CH-8200 Schaffhausen (CH); Bannwarth, Walter, D-79787 Lauchringen (DE)
(74) Vertreter: Szilagyi, Marianne

(56) Entgegenhaltungen:
- DE-U- 9 207 226
- FR-A- 2 487 471
- US-A- 3 175 473

## Beschreibung

Die Erfindung betrifft ein pneumatisch oder hydraulisch angetriebenes Ventil, insbesondere Membranventil, mit einem über eine Koppelstange betätigbaren Ventilkörper, wobei die Koppelstange zur Einstellung eines Mindestdurchflussquerschnitts über einen veränderbaren Anschlag in der entsprechenden Position gehalten wird, und wobei die Koppelstange den Gehäusedeckel eines Ventilgehäuses durchdringt und als Anzeiger für die Ventilstellung dient.

Ein Membranventil der eingangs erwähnten Art ist aus der DE-U-92 07 226 bekannt. Dort ist die Koppelstange über ein Aussengewinde direkt mit einer Buchse verbunden, welche gleichzeitig als veränderbarer Anschlag zur Einstellung eines Mindestdurchflussquerschnitts dient. Mit einem zweiten Anschlag der Buchse kann wahlweise anstelle des Mindestdurchflussquerschnitts der maximale Durchflussquerschnitt eingestellt werden. Ein wesentlicher Nachteil dieses vorbekannten Membranventils liegt darin, dass zur Veränderung der Ventilstellung jeweils der Gehäusedeckel demontiert werden muss. Zudem lassen sich die beiden Anschläge nicht unabhängig voneinander verstellen, so dass eine gleichzeitige Voreinstellung sowohl des minimalen als auch des maximalen Durchflussquerschnitts nicht möglich ist.

Angesichts dieser Gegebenheiten hat sich der Erfinder die Aufgabe gestellt, ein Ventil der eingangs genannten Art zu schaffen, bei dem eine Voreinstellung des minimalen Durchflussquerschnitts auf einfache Weise ohne Oeffnung des Gehäusedeckels möglich ist. Zudem soll der Betriebszustand des Ventils jederzeit ohne weiteres ersichtlich sein.

Zur erfindungsgemässen Lösung der Aufgabe führt, dass die Koppelstange durch eine Hülse bewegt ist, die den veränderbaren Anschlag bildet und über ein Aussengewinde in eine ortsfest mit dem Gehäusedeckel verbundene Gewindebüchse eingreift und durch eine Schraubbewegung in ihrer Achsenrichtung verschiebbar ist, und dass am freien Ende der Koppelstange ein Anschlagteil festgelegt ist, das mit der dem Ventilkörper abgewandten Stirnseite der Hülse in Anschlag bringbar ist.

Durch die erfindungsgemässe Anordnung eines Anschlagteils am freien Ende der Koppelstange ist die Position des Stellantriebs von aussen sichtbar und der Betrag des Hubes und damit der Oeffnungsstellung des Ventils messbar. Durch Drehen der Hülse in der Gewindebüchse kann je nach Drehrichtung die Hubbegrenzung der offenen oder geschlossenen Antriebsposition begrenzt werden. Durch Eindrehen der Hülse in die Gewindebüchse kann der maximale Durchflussquerschnitt, durch Herausdrehen der Hülse aus der Gewindebüchse der minimale Durchflussquerschnitt eingestellt werden.

Bei einer bevorzugten Ausführungsform des erfindungsgemässen Ventils ist das Anschlagteil in seiner Position an der Koppelstange veränderbar festgelegt, wobei bei einer zweckmässigen Ausgestaltungsform zumindest im Bereich des Anschlagteils die Koppelstange als Gewindestab ausgeführt ist, so dass die Position des Anschlagteils auf der Koppelstange durch eine Schraubbewegung verändert werden kann. Durch diese zusätzliche Veränderungsmöglichkeit des Anschlagteils an der Koppelstange kann gleichzeitig sowohl die offene als auch die geschlossene Antriebsposition eingestellt werden, sodass sich das Ventil zwischen voreingestellten Werten eines minimalen und eines maximalen Durchflussquerschnitts betätigen lässt.

Zur Einstellung des minimalen Durchflussquerschnitts ist die Koppelstange bevorzugt ortsfest mit einer Anschlagfläche verbunden, die als Anschlag gegen die dem Ventilkörper zugewandte Stirnseite der Hülse dient.

Zur Verminderung des Reibungswiderstandes zwischen dem Anschlagteil und der Hülse beim Drehen der Hülse in der Gewindebüchse kann das Anschlagteil mit einer Gleitauflage versehen sein. Anstelle einer Gleitauflage kann auch eine Anlauf- oder Zwischenscheibe aus gleitfähigem Material oder ein Wälzlager eingesetzt werden.

Der den Gehäusedeckel durchdringende Teil der Koppelstange mit dem Anschlagteil sowie ein Teil der Hülse sind bevorzugt von einer auf den Gehäusedeckel aufgesetzten Sichtglocke abgedeckt.

Membranventil-Antriebe werden in drei Funktionen gebaut, nämlich
- FC (fail close) Federkraft schliessend
- FO (fail open) Federkraft öffnend
- DA (double acting) doppelt wirkend

In allen drei Funktionsweisen erfolgt die Schliessbewegung durch eine Kraft, die über die Druckspindel auf die Membrane wirkt. Die Kraftverteilung der Druckspindel auf die Membrane erfolgt über das Druckstück. Die Kraft wird durch Federn oder durch ein pneumatisches oder hydraulisches Druckmedium erzeugt, wobei je nach Konstruktionsart die Membrane an das Druckstück oder an die Druckspindel gekoppelt ist.

Die erfindungsgemässe Anordnung lässt sich bei allen drei Funktionen eines Membranventil-Antriebs einsetzen.

Weitere Vorteile, Merkmale und Einzelheiten der Erfindung ergeben sich aus der nachfolgenden Beschreibung eines bevorzugten Ausführungsbeispiels sowie anhand der Zeichnung; diese zeigt schematisch in
- Fig. 1: einen Querschnitt durch einen Teil eines Ventilgehäuses;
- Fig. 2a-d: den Querschnitt von Fig. 1 bei verschiedenen Betriebszuständen des Ventils.

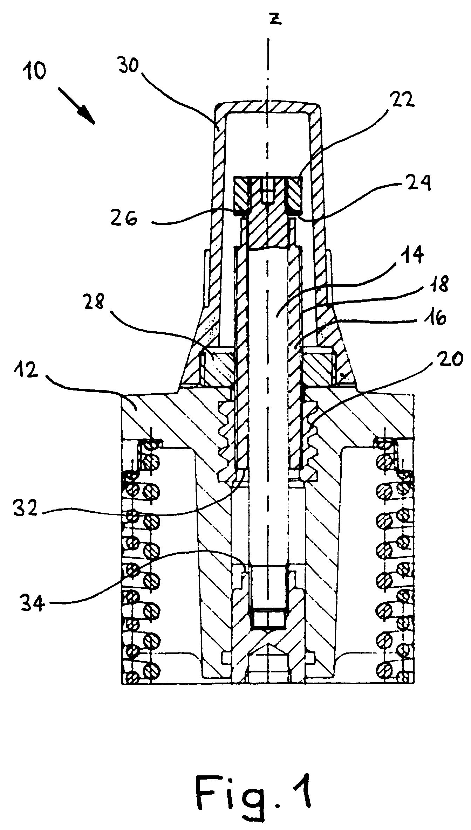

Ein aus Gründen der besseren Uebersicht in der Zeichnung nur teilweise wiedergegebenes Ventilgehäuse 10 eines nicht näher dargestellten Membranventils weist gemäss Fig. 1 einen Gehäusedeckel 12 auf, der von einer Koppelstange 14 durchsetzt ist. Die Koppelstange 14 durchdringt eine Hülse 16. Die mit einem Aussengewinde 18 versehene Hülse 16 ist in einer im Gehäusedeckel 12 festgelegten Gewindebüchse 20 drehbar derart eingesetzt, dass durch die Schraubbewegung eine Verschiebung der Hülse 16 in Richtung ihrer Längsachse z erfolgt.

Der dem Ventil abgewandten Seite der Koppelstange 14 ist ein Anschlagteil 22 aufgesetzt, welches der einen Anschlag bildenden Stirnseite 26 der Hülse 16 gegenüberliegt. Zur Erleichterung der Drehbewegung der Hülse 16 bei aufliegendem Anschlagteil 22 ist dieses auf seiner der Hülse 16 gegenüberliegenden Seite mit einer Gleitauflage 24 versehen. Anstelle der Gleitauflage 24 kann auch eine Anlaufscheibe aus gleitfähigem Material oder ein Wälzlager eingesetzt werden.

Die aus dem Gehäusedeckel 12 herausragenden Teile der Hülse 16 sowie der Koppelstange 14 mit dem dieser aufgesetztem Anschlagteil 22 sind mit einer Sichtglocke 30 aus durchsichtigem Material überdeckt. Die Sichtglocke 30 ruht hierbei auf einem die Hülse 16 umgreifenden, dem Gehäusedeckel 12 aufgesetzten Positionierring 28.

Zur Voreinstellung eines Mindestdurchflussquerschnitts des Ventils wird die Hülse 16 durch Drehen in der Gewindebüchse 20 in ihrer Achsenrichtung z verschoben. Durch die Auflage des Anschlagteils 22 an der Stirnseite 26 der Hülse 16 verschiebt sich die Koppelstange 14 jeweils um denselben längenmässigen Betrag, wodurch sich die Mindestöffnungsstellung des Ventils entsprechend ändert. Zur Einstellung des maximalen Durchflussquerschnitts ist an der Koppelstange 14 eine Anschlagfläche 34 vorgesehen, die mit der ventilseitigen Stirnseite 32 der Hülse 16 zusammenwirkt.

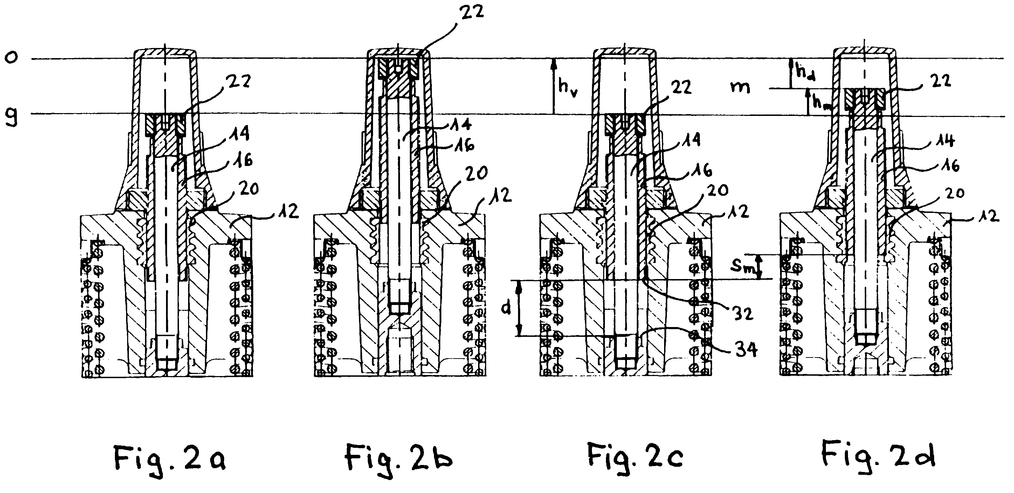

In den Fig. 2a bis d sind die Einstellungen der Hülse 16 und damit über das Anschlagteil 22 auch der Koppelstange 14 bei verschiedenen Betriebszuständen des Ventils dargestellt.

In Fig. 2a ist die Hülse 16 soweit in die Gewindebüchse 20 eingeschraubt, dass die Koppelstange 14 maximal abgesenkt und dadurch das Ventil geschlossen ist. Das Anschlagteil 22 befindet sich hierbei auf einer Höhe g.

In Fig. 2b ist die Hülse 16 so weit aus der Gewindebüchse 20 herausgeschraubt, dass die Koppelstange 14 maximal ausgefahren und damit das Ventil maximal geöffnet ist. Das Anschlagteil 22 liegt hierbei auf einer Höhe o.

Fig. 2c zeigt die Einstellmöglichkeit für den Maximalhub der Koppelstange 14, womit die maximale Offenstellung des Ventils und damit der maximale Durchflussquerschnitt begrenzt werden kann. Bei der in Fig. 2c dargestellten Einstellung ist die volle Hubbewegung hv der Koppelstange 14 und damit des Ventils möglich, d.h. bei Betätigung des Ventils geht dieses von seiner Schliessstellung in seine maximal mögliche Offenstellung. Das Anschlagteil 22 bewegt sich somit von der Ausgangshöhe g der Schliessstellung auf die Endhöhe o der maximalen Offenstellung. Der maximale Hub der Koppelstange 14 und damit des Ventils kann auf einfache Weise dadurch begrenzt werden, dass die Hülse 16 in der Gewindebüchse 20 noch weiter in Richtung des Ventils eingedreht wird. Dadurch verringert sich die Distanz d zwischen der gegen das Ventil gewandten Stirnseite 32 der Hülse 16 und der Anschlagfläche 34 an der Koppelstange 14, sodass anstelle der vollen Hubbewegung hv nur noch eine entsprechend reduzierte Hubbewegung möglich ist. Durch Betätigung des Ventils öffnet sich dieses somit nur um diese reduzierte Hubbewegung, d.h. das Anschlagteil 22 bewegt sich von Anfangshöhe g der Schliessstellung nur bis auf eine unterhalb der Höhe o der maximalen Oeffnungsstellung des Ventils liegende Höhe. Bei der in Fig. 2c gezeigten Einstellung ist die Distanz d auf ihren Maximalwert eingestellt, was den Betrag einer vollen Hubbewegung hv entspricht. Diese Einstellung gilt auch für alle andern Ventileinstellungen, bei denen der höchstmögliche Durchflussquerschnitt des Ventils bei dessen Offenstellung erwünscht ist.

Bei der in Fig. 2d gezeigten Einstellung ist die Hülse 16 so weit aus der Gewindebüchse 20 herausgeschraubt, dass das Ventil in seiner Grundstellung teilweise geöffnet ist. Der sich dadurch ergebende Mindestdurchflussquerschnitt des Ventils zeigt sich in der Lage des Anschlagteils 22, das auf einer Höhe m zwischen der Höhe g der Schliessstellung und der Höhe o der maximalen Offenstellung des Ventils liegt. Durch Verstellung der Hülse 16 um den Betrag sm ergibt sich damit eine Teilhubbewegung hm auf die Höhe m der Minimaldurchflussstellung. Bei Betätigung des Ventils verbleibt somit nur noch eine Differenzhubbewegung hd bis zur maximalen Offenstellung des Ventils.

Die in Fig. 2d dargestellte Einstellung des Minimaldurchflussquerschnitts des Ventils lässt sich auch dadurch erzielen, dass das auf die Koppelstange 14 aufgesetzte Anschlagteil 22 als Mutter auf die als Gewindestange ausgebildete Koppelstange 14 aufgeschraubt ist. Durch das weitere Aufschrauben des Anschlagteils bzw. der Mutter 22 auf die Koppelstange 14 in Richtung des Ventils wird somit die Koppelstange 14 und somit das mit ihr gekoppelte Ventil angehoben. Die Verkürzung der Distanz d zwischen der ventilseitigen Stirnseite 32 der Hülse 16 und der Anschlagfläche 34 an der Koppelstange 14 kann somit auch durch mehr oder weniger weites Aufschrauben des Anschlagteils bzw. der Mutter 22 auf die Koppelstange 14 erreicht werden.

Durch die zweifache Einstellmöglichkeit der Hubbewegung der Koppelstange 14 und damit des Ventils ist es möglich, durch eine entsprechende Voreinstellung sowohl der Lage der Hülse 16 als auch des Anschlagteils bzw. der Mutter 22 auf einfache Weise sowohl die offene als auch die geschlossene Antriebsposition des Ventils derart einzustellen, dass sich das Ventil zwischen einer ersten Stellung mit einem voreingestellten minimalen Durchflussquerschnitt und einer zweiten Stellung mit einem voreingestellten maximalen Durchflussquerschnitt betätigen lässt.

Wie insbesondere aus den Fig. 2a bis d hervorgeht, lässt sich jede beliebige Voreinstellung des Ventils von aussen auf einfache Weise durch Veränderung der Position der Hülse 16 in der Gewindebüchse 20 bzw. des Anschlagteils 22 auf der Koppelstange 14 realisieren. Zudem ist die jeweilige Betriebsstellung des Ventils jederzeit ohne weiteres durch die Lage der Hülse 16 und des Anschlagteils 22 ersichtlich.

## Patentansprüche

1. Pneumatisch oder hydraulisch angetriebenes Ventil, insbesondere Membranventil, mit einem über eine Koppelstange (14) betätigbaren Ventilkörper, wobei die Koppelstange (14) zur Einstellung eines Mindestdurchflussquerschnitts über einen veränderbaren Anschlag (16) in der entsprechenden Position gehalten wird, und wobei die Koppelstange (14) den Gehäusedeckel (12) eines Ventilgehäuses (10) durchdringt und als Anzeiger für die Ventilstellung dient, dadurch gekennzeichnet, dass die Koppelstange (14) eine Hülse (16) durchdringt, welche Hülse (16) den veränderbaren Anschlag bildet und über ein Aussengewinde (18) in eine ortsfest mit dem Gehäusedeckel (12) verbundene Gewindebüchse (20) eingreift und durch eine Schraubbewegung in ihrer Achsenrichtung (z) verschiebbar ist, und dass am freien Ende der Koppelstange (14) ein Anschlagteil (22) festgelegt ist, das mit der dem Ventilkörper abgewandten Stirnseite (26) der Hülse (16) in Anschlag bringbar ist.

2. Ventil nach Anspruch 1, dadurch gekennzeichnet, dass das Anschlagteil (22) in seiner Position an der Koppelstange (14) veränderbar festgelegt ist.

3. Ventil nach Anspruch 2, dadurch gekennzeichnet, dass die Koppelstange (14) zumindest im Bereich des Anschlagteils (22) als Gewindestab ausgeführt ist und das Anschlagteil (22) ein Innengewinde aufweist, so dass die Position des Anschlagteils (22) auf der Koppelstange (14) durch eine Schraubbewegung verändert werden kann.

4. Ventil nach einem der Ansprüche 1 bis 3, dadurch gekennzeichnet, dass die Koppelstange (14) ortsfest mit einer Anschlagfläche (34) verbunden ist, die als Anschlag gegen die dem Ventilkörper zugewandte Stirnseite (32) der Hülse (16) dient.

5. Ventil nach einem der Ansprüche 1 bis 4, dadurch gekennzeichnet, dass das Anschlagteil (22) mit einer Gleitauflage (24) versehen ist.

6. Ventil nach einem der Ansprüche 1 bis 4, dadurch gekennzeichnet, dass zwischen dem Anschlagteil (22) und der Hülse (16) eine Anlaufscheibe aus gleitfähigem Material oder ein Wälzlager angeordnet ist.

7. Ventil nach einem der Ansprüche 1 bis 6, dadurch gekennzeichnet, dass der den Gehäusedeckel (12) durchdringende Teil der Koppelstange (14) mit dem Anschlagteil (22) sowie ein Teil der Hülse (16) von einer auf den Gehäusedeckel (12) aufgesetzten Sichtglocke (30) abgedeckt sind, an welcher eine Skalierung zur Hubüberwachung anbringbar ist.

8. Ventil nach einem der Ansprüche 1 bis 6, dadurch gekennzeichnet, dass bei Ausfall der Steuerenergie die Hülse (16) eine Betätigung des Ventils bzw. Handnotbetätigung ermöglicht.

## Claims

1. Pneumatically or hydraulically operated valve, in particular a diaphragm valve, having a valve body actuatable by means of a coupling rod (14), the coupling rod (14) being held in the appropriate position for setting a minimum throughflow cross-section by means of a variable stop (16), and the coupling rod (14) passing through the housing cover (12) of a valve housing (10) and serving as an indicator for the valve position, characterised in that the coupling rod (14) passes through a sleeve (16), which forms the variable stop and engages by means of an outer thread (18) into a threaded bushing (20) connected fixedly to the housing cover (12), and can be moved by a screw movement in its axial direction (z), and in that fixed at the free end of the coupling rod (14) is a stop member (22) which can be brought into abutment with the end (26) of the sleeve (16) remote from the valve body.

2. Valve according to claim 1, characterised in that the stop member (22) is variably fixed in its position on the coupling rod (14).

3. Valve according to claim 2, characterised in that the coupling rod (14) is constructed as a threaded rod at least in the region of the stop member (22), and the stop member (22) has an inner thread so that the position of the stop member (22) on the coupling rod (14) can be varied by a screw movement.

4. Valve according to one of claims 1 to 3, characterised in that the coupling rod (14) is connected fixedly to a stop face (34) which serves as a stop against the end (32) of the sleeve (16) facing the valve body.

5. Valve according to one of claims 1 to 4, characterised in that the stop member (22) is provided with a sliding bearing (24).

6. Valve according to one of claims 1 to 4, characterised in that between the stop member (22) and the sleeve (16) there is arranged a buffer disc of slippery material or a roller bearing.

7. Valve according to one of claims 1 to 6, characterised in that the part of the coupling rod (14) with the stop member (22) passing through the housing cover (12), and a part of the sleeve (16), are covered by a display cap (30) placed onto the housing cover (12) on which a scale can be fitted for monitoring the stroke.

8. Valve according to one of claims 1 to 6, characterised in that if the control energy fails, the sleeve (16) allows actuation of the valve or manual emergency actuation.

## Revendications

1. Valve à entraînement pneumatique ou hydraulique, en particulier valve à membrane, comportant un corps de clapet susceptible d'être actionné par l'intermédiaire d'une bielle de couplage (14), qui, pour le réglage d'une section transversale minimale de passage d'écoulement, est maintenue dans la position correspondante en vue du par l'intermédiaire d'une butée réglable (16), et dans laquelle la bielle de couplage (14) traverse le couvercle de carter (12) d'un carter de valve (10) et sert d'indicateur pour la position de la valve, caractérisée en ce que la bielle de couplage (14) traverse une douille (16), qui constitue la butée réglable et se visse, par l'intermédiaire d'un filetage extérieur (18), dans un manchon fileté (20), relié de façon localement fixe au couvercle de carter (12) et qui est déplaçable dans sa direction axiale (z), au moyen d'un mouvement de vissage, et en ce qu'à l'extrémité libre de la bielle de couplage (14) est fixée une partie de butée (22) qui est susceptible de venir en butée avec la face frontale (26), opposée au corps de clapet, de la douille (16).

2. Valve selon la revendication 1, caractérisée en ce que la partie de butée (22) est fixée de façon réglable concernant sa position sur la bielle de couplage (14).

3. Valve selon la revendication 2, caractérisée en ce que la bielle de couplage (14) est réalisée, au moins dans la zone de la partie de butée (22), sous forme d'une barre filetée, et la partie de butée (22) présente un filetage intérieur, de manière que la position de la partie de butée (22) sur la bielle de couplage (14) puisse être modifiée par un déplacement de vissage.

4. Valve selon l'une des revendications 1 à 3, caractérisée en ce que la bielle de couplage (14) est relié de façon localement fixe à une surface de butée (34) qui sert de butée contre la face frontale (32), tournée vers le corps de clapet, de la douille (16).

5. Valve selon l'une des revendications 1 à 4, caractérisée en ce que la partie de butée (22) est pourvue d'un revêtment de glissement (24).

6. Valve selon l'une des revendications 1 à 4, caractérisée en ce qu'entre la partie de butée (22) et la douille (16) est disposé un disque de démarrage constitué d'un matériau permettant le glissement ou bien est disposé un palier à roulement.

7. Valve selon l'une des revendications 1 à 6, caractérisée en ce que la partie, traversant le couvercle de carter (12), de la bielle de couplage (14) avec la partie de butée (22), ainsi qu'une partie de la douille (16) sont recouvertes par une cloche d'observation (30) posée sur le couvercle de carter (12) et sur lequel une échelle graduée est susceptible d'être montée pour surveiller la course.

8. Valve selon l'une des revendications 1 à 6, caractérisée en ce qu'en cas de défaillance de l'énergie de commande, la douille (16) permet d'effectuer l'actionnement de la valve, ou l'actionnement de secours manuel.
